# EUROPEAN PATENT APPLICATION

(11) **EP 1 369 787 A2**
(43) Date of publication of application: **10.12.2003**
(21) Application number: 03012184.2
(22) Date of filing: 04.06.2003
(51) Int. Cl.: G06F 11/36

(54) **Processor device and information processing device, compiling device, and compiling method using said processor device**

(30) Priority: 07.06.2002 JP 2002166612
(71) Applicant: MATSUSHITA ELECTRIC INDUSTRIAL CO., LTD., Kadoma-shi, Osaka 571-8501 (JP)
(72) Inventor: Fuchikami, Ryuji, Fukuoka-Ken,811-2304, Kasuya-Gun (JP); Yonezawa, Tomonori, Fukuoka-Shi, Fukuoka-Ken, 812-0016 Fukuo (JP); Ohtsuki, Hiroki, 4-10-3 Kaedegaoka, Hiki-Gun, 350-0314, Hiki-Gun (JP); Tanaka, Yoshiteru, 384-4-203, Oaza Nakabaru, 811-2304, Fukuoka (JP)
(74) Representative: Pautex Schneider, Nicole

(57) **Abstract**

A processor device comprises: an instruction processing unit (1), which reads and successively executes a program on a memory device (30); an address register (3), which stores the absolute address of a pointer in the program; a range information register (4), which stores range information concerning the pointer by using the absolute address; and an exception generating unit (7), which, when the instruction processing unit accesses the memory device using the pointer concerning the address register, inputs the output of the instruction processing unit and the range information in the range information register and, if there is a range violation of the memory device, outputs an exception signal (S1) to the instruction processing unit. A pointer and its access range information are associated in an inseparable manner and accurate access protection is performed even beyond a module.

## Description

This invention relates to a processor device and a compiler device with a memory protection function and arts related thereto.

With most of the prior art, memory protection in a computer system is implemented by a processor or a compiler alone and memory protection by a combination of a processor and a compiler is simply an extension of such an art.

Memory protection techniques in a processor includes segment protection, using a segment register or other register device that indicates an address range, paging protection, in which a processor is provided with a memory management unit (MMU), etc., which sets the accessible range of a memory, etc.

With these arts, the setting of an address range is enabled only with an OS that operates in a privileged mode of a processor, and an exception is generated upon improper access.

Also as an art of memory protection by a compiler alone, there exists a method of embedding codes, by which memory monitoring functions are realized entirely by software, in a program.

Though there exists arrangements with a processor mechanism that speeds up memory monitoring by software, such arrangements only have a mechanism that speeds up the memory range check, and there are no mechanisms that clearly handle pointers in a high-level language.

With the above, firstly with segment protection and paging protection, rewriting can only be performed under the privileged mode of the processor on which an OS is executed. These methods, therefore, cannot be used when an advanced OS with a memory protection function does not exist.

Also, an MMU, etc., which has a large overhead for task switching, cannot be used in control and communication applications.

The unit of allocation of a segment register or an MMU table is a process unit allocated by an OS, and fine memory protection suited to the internal structure of an application is impossible. It is difficult to apply the fine memory protection in an embedded application to a large-scale program, wherein only a single process or equivalent thereof exists.

Memory protection techniques carried out by software is not practical in that checking requires much time.

There exists a means, with which a hardware address range comparator is equipped, and a processor that speeds up the memory protection management is used. However, in a case where a pointer is transferred among objects, an access range, which is independent of the address value held by the pointer, must be transferred at the same time with the pointer. Since an architecture that rigorously supports this does not exist, the means is restricted to limited protection of a narrow range.

Even if the above is to be carried out rigorously, since there is no function for manipulating a pointer and an access range at the same time, the consistency of the pointer and the access range will be lost when an interrupt occurs during the manipulation.

In view of the above, Japanese Unexamined Patent No. H7-6095 proposes an art of preventing improper access without lowering the execution speed of a program when a memory block is accessed via a pointer.

With this arrangement, a register for storing an address range is prepared in a processor. However, a register for storing the pointer value itself is not prepared.

Thus in actuality, the pointer and the information on the address range enabled for the pointer had to be processed separately with this arrangement.

With this arrangement, in order to ensure the atomicity, which describes the pointer and the access range are always consistent, interrupts must be disabled each time a pointer operation is performed. This makes the efficiency extremely low.

Also, this arrangement accommodates for a single process by a memory range check within a local module, etc.; thus, when memory access beyond a module occurs, it is difficult to maintain the protection range accurately.

An object of this invention is to provide, in a programming language that uses pointers, an art of accurately protecting the access ranges of pointers beyond modules while ensuring real time property.

A processor device of a first mode of this invention comprises: an instruction processing unit operable to read a program on a memory device to execute the program on the memory device; an address register operable to be read and written by the instruction processing unit to store the absolute address of a pointer in the program; a range information register operable to be read and written by the instruction processing unit and stores range information concerning the pointer by using the absolute address; and an exception generating unit operable to input the output of the instruction processing unit and the range information in the range information register, and to output an exception signal to the instruction processing unit, when the instruction processing unit accesses the memory device using the pointer concerning the address register, and, if there is a range violation of the memory device.

With this arrangement, a pointer and its range information can be associated in an inseparable manner, and access violation by pointer operation can be detected even if the pointer is used beyond a module, thus enabling improvement of operation stability.

A processor device of a second mode of this invention comprises: an instruction processing unit operable to read a program on a memory device to execute the program on the memory device; a program counter operable to be read and written by the instruction processing unit, and to store an execution address value of the program; a range information register operable to be read and written by the instruction processing unit, and to store range information concerning the execution address value of the program; and an exception generating unit operable to input this new execution address value and the range information in the range information register when the instruction processing unit stores a new execution address value, and to output an exception signal to the instruction processing unit if there is a range violation.

With this arrangement, the execution address value and its range information can be associated in an inseparable manner and even if the execution address value changes due to branching, etc., crash detection can be performed, thus enabling improvement of operation stability.

A processor device of a third mode of this invention comprises: an instruction processing unit operable to read a program on a memory device to execute the program on the memory device; an address register operable to be read and written by the instruction processing unit, and to store the absolute address of a pointer in the program; a first range information register operable to be read and written by the instruction processing unit, and to store range information concerning the pointer by using the absolute address; a first exception generating unit operable to input the output of the instruction processing unit and the range information in the first range information register when the instruction processing unit accesses the memory device, and to output a first exception signal to the instruction processing unit if there is a range violation of the memory device; a program counter operable to be read and written by the instruction processing unit, and to store an execution address value of the program; a second range information register operable to be read and written by the instruction processing unit, and to store range information concerning the execution address value of the program; and a second exception generating unit operable to input this new execution address value and the range information in the second range information register when the instruction processing unit stores a new execution address value in the program counter, and to output a second exception signal to the instruction processing unit if there is a range violation.

With this arrangement, a pointer and its range information can be associated in an inseparable manner and even if the pointer is used beyond a module, access violation by pointer operation can be detected, thus enabling improvement of operation stability. Also, the execution address value and its range information can be associated in an inseparable manner and even if the execution address value changes due to branching, etc., crash detection can be performed, thus enabling improvement of operation stability.

A processor device of a fourth mode of this invention, wherein the address register, the first range information register, the program counter, and the second range information register are all composed of general-purpose registers.

With this arrangement, the necessary functions can be installed in an existing processor device without making significant changes.

A processor device of a fifth mode of this invention, wherein the range information includes an upper limit value of the range and a lower limit value of the range.

With this arrangement, the range can be defined clearly by the upper limit value and the lower limit value.

A processor device of a sixth mode of this invention, the range information includes a lower limit value of the range and the length from the lower limit value to an upper limit value of the range.

With this arrangement, the range can be defined clearly by the upper limit value and the length from the lower limit value to the upper limit value of the range.

A processor device of a seventh mode of this invention, wherein the range information includes an attribute indicating the enabling/disabling of reading and writing.

By the attribute of this arrangement, finely tuned access control can be realized.

A processor device of an eighth mode of this invention, wherein the range information includes an upper limit value of the range but does not include a lower limit value of the range.

With this arrangement, range protection that is practically effective can be realized with a low memory amount.

A processor device of a ninth mode of this invention, wherein the instruction processing unit executes, in a single machine language instruction, a process of storing the absolute address of a pointer of a program in the address register and a process of storing range information on this pointer in the range information register.

A processor device of a tenth mode of this invention, wherein the instruction processing unit executes, in a single machine language instruction, a process of storing a new execution address value in the program counter and a process of storing range information of the execution address value in the range information register.

With these arrangements, by the above-mentioned processes being executed by a single machine language instruction, the processes are prevented from being severed by an interrupt, and accurate operation of high atomicity is enabled.

The above, and other objects, features and advantages of the present invention will become apparent from the following description read in conjunction with the accompanying drawings, in which like reference numerals designate the same elements.

Fig. 1 is a block diagram of a processor device of a first embodiment of this invention.
Fig. 2(a) is an exemplary diagram of source codes implemented in the first embodiment of this invention.
Figs. 2(b) to (d) are explanatory diagrams illustrating the states of a pointer with range information of the same example.
Fig. 3 is a block diagram of a compiling device of a second embodiment of this invention.
Fig. 4 is a flowchart of the same compiling device.
Fig. 5 is a block diagram of a compiling device of a third embodiment of this invention.
Fig. 6 is a flowchart of the same compiling device.
Fig. 7 is a block diagram of an information processing device equipped with the processor device of the first embodiment of this invention.
Figs. 8(a) and (b) are external views of the same information processing device.

First, before describing specific arrangements, the basic concepts of the invention of this Application shall be described.

### (Memory access protection)

Many of the existing memory protection techniques provide protection of rough grade at the process unit of a program and under the premise that an OS exists.

Though this is effective in a case where a non-specific set of codes are executed, it is not suited for embedded systems that execute only programs intended by a designer.

In a case where a memory protection function is to be transferred to a compiler, memory protection of fine grade can be enabled if the compiler is made to hold memory ranges according to the variables that are premised for access.

More specifically, a pointer variable, for which there is a possibility that a memory range violation will occur, is associated in an inseparable manner with the access range of the variable that is used in computing the pointer and, thereafter, a range check is performed when access using this pointer variable is performed.

### (Functions required of a processor)

In order to carry out memory access protection at high speed, functions must be added to a normal processor. First, a processor must be provided with a register that stores the absolute address of a pointer and a range information register that can hold the access range of the pointer. These registers should be enabled to be read or written in a single instruction without intervention of an interrupt, etc.

The pointer that includes the access range information is thus made operable in an atomic manner, and a programmer will not need to be especially aware that the pointer is associated with the range information.

Also in this case, the address value and the range information of a pointer must be independent of each other so that they can be separated.

Though among processors that simply enable high-speed memory protection by software, there are those with which the range from the address value is equipped at the same time. In order to realize rigorous consistency at the level of a high-level language, the memory range indicated by the access range information must not change no matter what value the address value is changed to.

The processor should also be provided with an address comparator as an exception generating unit. When memory access using a pointer occurs, the finally generated address and the address range held by the pointer are compared and an exception is generated if the address is out of range.

Such techniques can be installed additionally simply as extension functions to an existing processor architecture.

### (Functions required of a compiler)

In allocating memory areas to all variables, a compiler must hold the ranges of the respective variables.

If a pointer is generated within a program, the pointer must be generated in the conventional manner and the range information of the variable that is the origin of generation of this pointer must be associated in an inseparable manner with this pointer.

If in this process, an address is generated from an immediate value within a program by I/O access, etc., the access range of the corresponding pointer is made to indicate the entire memory space. By doing so, the pointer generated from an immediate value can be handled as a pointer without access protection as in the conventional case.

If necessary, the access range of a pointer generated from an immediate value may be limited in advance by a compile option, etc., in advance or an extended syntax may be prepared and embedded inside the program.

Operational processes on a pointer can be performed in the conventional manner, and protection is provided by the processor side during access.

Besides pointers, array access is also a factor of range violation. Though an array differs from a pointer, in accessing an array, the address of the array is read into a register and access is performed by incrementing an index. Thus protection in the same manner as that for a pointer can be realized by an arrangement wherein, when an array address is to be read into a register, the address range is read along with the access range of the array into a range information register. There is thus no practical benefit in distinguishing between an array address and a pointer. Thus with the present Specification, the general definition is expanded and the address of an array is also handled as a "pointer."

Also, a compiler is normally provided along with a dedicated library program and in many cases, the library includes a dynamic memory allocation function (for example, the malloc function, etc.,). In this case, arrangements are made to return a pointer having the range information on the memory secured by the dynamic memory allocation library. Such pointers are included among and can be handled as the "pointers" of this invention.

### (Improvement of efficiency by access range restriction)

When a pointer and its range information are associated in an inseparable manner as described above, in regard to the memory usage amount, the size of a pointer is enlarged as a matter of fact by the size of the range information. However, pointers that are used as variables are normally fewer in number in comparison to variables besides pointers, and the increase of the RAM usage amount does not present much of a problem in view of the increase of the memory capacity in recent years. Range information, besides those of pointer variables, that are read tacitly may be stored in a ROM.

Also in regard to efficiency, since the transfer of pointer information among modules is performed by using registers in many cases, the lowering of efficiency will not occur due to register-to-register movement if the processor is one with which a pointer can be read and written along with the access range in an atomic manner.

Even for memory-to-register movement, since an address value is made continuous with its address range on the memory, improved efficiency of burst access and cache hitting of the memory can be anticipated, and the lowering of efficiency will be extremely low.

However, if even a low degree of lowering of efficiency cannot be tolerated, the address range information may be limited to just the restriction concerning an upper limit of the address, thereby halving the information amount of the address range information.

This requires a processor and a compiler equipped with instructions that can handle just half of an address value. Also, since many range violations occur in regard to an upper address limit, though the completeness of access protection will be lost, adequate practical effects can be obtained.

### (Detection of program crash)

many of the existing program for crash detection techniques by memory monitoring provide protection of rough grade at the process unit of program, under the premise that an OS exists.

Though this is effective in a case where a non-specific set of codes are executed, it is not suited for embedded systems that execute only programs intended by a designer.

In a case where a crash detection function is to be transferred to a compiler, crash detection of fine grade can be enabled if the compiler is made to hold memory ranges according to the variables that are premised for access.

Specifically, a function pointer variable, for which there is a possibility of occurrence of a program crash, is associated in an inseparable manner with the code range of the variable used in computing the function pointer and, thereafter, a range check is performed when branching to another function of the program is performed and during execution.

Though only checking when branching is performed may be sufficient if just a protection of a function of a high-level language is to be provided, since checking during execution can also be realized with the same mechanism, a high effect is exhibited even in the process of branching from a function of a high-level language to a module prepared in an assembly language.

### (Functions required of a processor)

In order to carry out program crash detection at high speed, functions must be added to a normal processor. First, a processor must be provided with a program counter and a register that can hold the access range of this counter.

In addition, a comparator should be provided as an exception generator that compares the program counter value with the range information when the program counter value is renewed and generates an exception if the counter value is out of range.

A branch instruction that rewrites the program counter along with its range information is also necessary.

Such techniques can be installed additionally simply as extension functions to an existing processor architecture.

### (Functions required of a compiler)

In allocating code memory areas to all functions, a compiler must hold the ranges for the respective functions.

If a function pointer is generated within a program, the function pointer must be generated in the conventional manner, and the code range of the function that is the origin of generation of this function pointer must be associated in an inseparable manner with the function pointer.

If in this case, an OS service call or other call to a function of unclear range is to be embedded, the access range of the corresponding function pointer is made to indicate the entire memory space. By doing so, the generated function pointer can be handled as a function pointer without access protection as in the conventional case.

If necessary, the access range of the function pointer in this case may be restricted in advance by a compile option, etc., or an extended syntax may be prepared and embedded inside the program.

A function call is preferably performed by branching with a branch instruction that renews the access range of the program counter along with the program counter value. Branching within a function is performed by branching by an instruction that renews just the program counter value as in the conventional case.

### (Improvement of efficiency by access range restriction)

With the above arrangement, the size of a function pointer is enlarged as a matter of fact by the size of the range information and the memory usage amount increases. However, normally, the proportion of use of a function pointer is low in comparison to a data variable.

For a static function call, the function address and range values may be stored in a ROM.

By storing the address value and the range information in a continuous manner in a memory, improved efficiency of burst access and cache hitting of the memory can be anticipated and the lowering of efficiency will be extremely low.

However, if even a low degree of lowering of efficiency cannot be tolerated, the address range information may be limited to just the restriction concerning an upper limit of the address for just the protection of functions prepared in assembly language, thereby halving the information amount of the address range information.

This requires a processor and a compiler equipped with instructions that can handle just half of an address value. However, since many assembly language crashes occur for an upper address limit, though the completeness of crash detection will be lost, adequate practical effects can be obtained.

Specific embodiments of this invention shall now be described based on the above description and in reference to the drawings.

### (First embodiment)

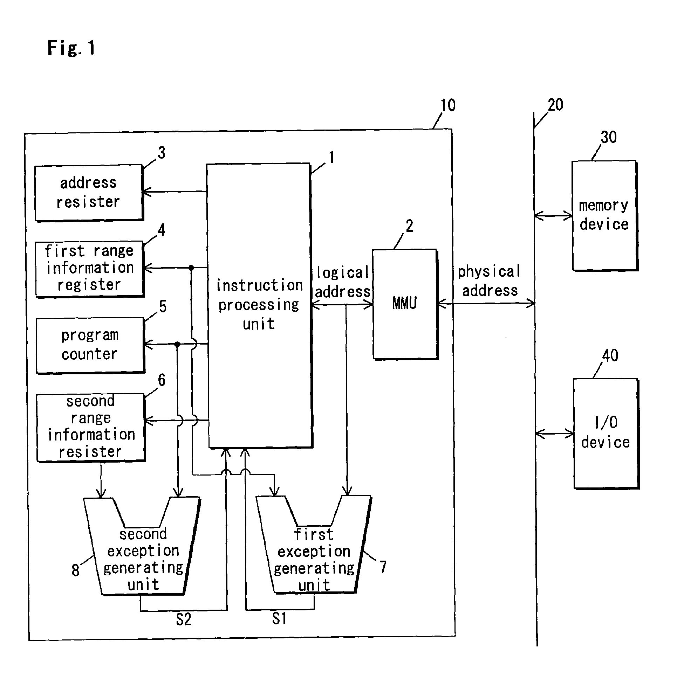

This embodiment relates to a processor device. Fig. 1 is a block diagram of a processor device of the first embodiment of this invention.

As shown in Fig. 1, this processor device 10 is connected via bus 20 to memory device 30, I/O device 40, etc., Processor device 10 is equipped with the following components.

Instruction processing unit 1 reads a program on memory device 30 via bus 20, successively executes the program, and performs input/output with I/O device 40.

With the present embodiment, an MMU (memory management unit) is disposed between instruction processing unit 1 and bus 20, instruction processing unit 1 and MMU 2 perform input/output using logical addresses, and MMU 2 performs logical address/physical address conversion. However, for example, the MMU may be omitted and instruction processing unit 1 may be arranged to perform input/output of physical addresses.

In addition to elements of a normal processor device, processor device 10 of the present embodiment is provided with the following registers (normally, these may be arranged from general-purpose registers).

First, address register 3 is read and written by instruction processing unit 1 and stores the absolute address of a pointer in a program. Also, first range information register 4 is read and written by instruction processing unit 1 and stores range information concerning the abovementioned pointer by using the absolute address.

This address register 3 and first range information register 4 are paired and associated in an inseparable manner. The correspondence between address register 3 and first range information register 4 is controlled by instruction processing unit 1.

Instruction processing unit 1 executes, in a single machine language instruction (register load instruction with access range information), a process of storing the absolute address of a pointer of a program in address register 3 and a process of storing the range information on this pointer in first range information register 4.

More specifically, upon reading this register load instruction from memory device 30, instruction processing unit 1 decodes and executes this instruction, and as a result, instruction processing unit 1 stores the absolute address of a pointer of a program in address register 3 and the range information on this pointer in first range information register 4.

This instruction is not premised on the processor being in the privileged mode. That is, this instruction is a singular instruction that can be written among the source codes of an application program. Also, since this instruction is a single machine language instruction, an interrupt will not arise during the instruction, thus ensuring that the address value of address register 3 and the range information in first range information register 4 will not be separated. Atomicity is thus secured.

The range information stored in first range information register may take on either (Example 1) a form that includes an upper limit value of the range and a lower limit value of the range or (Example 2) a form that includes a lower limit value of the range and the length from this lower limit value to an upper limit value of the range. Since with (Example 1) or (Example 2), three addresses are stored for one pointer, the amount of memory used by a pointer will be three times that of the normal case.

Furthermore, fine control can be performed by (Example 3) including an attribute indicating the enabling/disabling of reading and writing (for example, both reading and writing are enabled, writing is disabled, etc.,) in the range information.

Also as mentioned above in the description of the basic concepts, practical effects may be provided with (Example 4) the range information being just an upper limit value of the range and not including a lower limit value of the range nor the length from a lower limit value to the upper limit value of the range.

In Fig. 1, a first exception generating unit 7 is arranged from a comparator. When instruction processing unit 1 uses a pointer concerning address register 3 to access memory device 30, first exception generating unit 7 inputs the output of instruction processing unit 1 (a logical address value in the present example) and the range information in first range information register 4, performs a comparison computation, and, if there is a range violation of memory device 30, outputs an exception signal S1 to instruction processing unit 1.

This access of memory device 30 may be carried out as direct addressing or as indirect addressing by incrementing/decrementing of an index value.

With this processor architecture, a pointer, with which range information is associated in an inseparable manner, can be handled at high speed and yet atomically by a single machine language instruction and while performing a range check.

Moreover, an exception can be generated and inappropriate memory access can be trapped by a program itself and without the intervention of an OS or other program that operates in a privileged mode of the processor.

As shown in Fig. 1, this processor device 10 is also provided with the following registers (normally, these may be arranged from general-purpose registers).

A program counter 5 is read and written by instruction processing unit 1 and stores an execution address value of a program. Also, a second range information register 6 is read and written by instruction processing unit and stores range information concerning the execution address value of the program.

This program counter 5 and second range information register 6 are paired and associated in an inseparable manner. The correspondence between program counter 5 and second range information register 6 is controlled by instruction processing unit 1.

Instruction processing unit 1 executes, in a single machine language instruction (branch instruction with access range information), a process of storing a new execution address value in program counter 5 and a process of storing the range information of this execution address value in second range information register 6.

These processes are performed when the execution address value in program counter 5 is incremented or when a branch instruction, such as a JUMP or CALL instruction, is executed.

More specifically, upon reading this branch instruction from memory device 30, instruction processing unit 1 decodes and executes this instruction, and if an exception signal S2, which shall be described below, is not output, instruction processing unit 1 stores the new execution address value of the program in program counter 5 and, if necessary, stores the range information on the execution address value in second range information register 6 accordingly.

The pairing of program counter 5 and second range information register 6 is similar to the above-described pairing of address register 3 and first range information register 4.

That is, this instruction (branch instruction with access range information) is not premised in the processor being in a privileged mode. That is, this instruction is a singular instruction that can be written among the source codes of an application program. Also, since this instruction is a single machine language instruction, an interrupt will not occur in the middle of the instruction, and that the execution address value in program counter 5 will not be separated from the range information in second range information register 6 can thus be ensured. Atomicity is thereby secured.

Also, the range information can take the forms described above. That is the range information stored in second range information register 6 may take on either (Example 5) a form that includes an upper limit value of the range and a lower limit value of the range or (Example 6) a form that includes a lower limit value of the range and the length from this lower limit value to an upper limit value of the range. Since with (Example 5) or (Example 6), three execution address values are stored for one execution address value, the amount of memory used will be three times that of the normal case.

Also as mentioned above in the description of the basic concepts, practical effects may be provided with (Example 7) the range information including just an upper limit value of the range and not including a lower limit value of the range nor the length from a lower limit value to the upper limit value of the range.

In Fig. 1, a second exception generating unit 8 is arranged from a comparator. When instruction processing unit 1 stores a new execution address value in program counter 5, second exception generating unit 8 inputs this new execution address value and the range information in second range information register 6 and, if there is a range violation, outputs a second exception signal S2 to the instruction processing unit.

Unlike first exception generating unit 7, second exception generation unit 8 does not output exception signal S2 after instruction processing unit 1 has set a new execution address value but is arranged to generate exception signal S2 when instruction processing unit 1 is about to set a new execution address value. This is done because the setting of an invalid execution address value in program register 5 is in itself a problem and is thus done to prevent such a situation in advance and avoid crashing (transfer of control to an execution address value that is not intended by a programmer).

With the prior arts, crashing of a processor could only be detected in process units and if an address crash occurred by chance within a process itself, this was difficult to detect. Also, crash detection itself could not be performed in a single process environment that is often implemented in embedded systems.

With a processor architecture such as that of the present embodiment, the execution range of a processor can be controlled within a software module, and crashing of a module written in assembly language, etc., and crashing of a C language module due to data destruction can be detected at fine grade.

Also with this processor architecture, an execution address value, with which range information is associated in an inseparable manner, can be handled at high speed and yet atomically by a single machine language instruction and while performing a range check.

Moreover, an exception can be generated and inappropriate branching can be trapped by a program itself and without the intervention of an OS or other program that operates in a privileged mode of the processor.

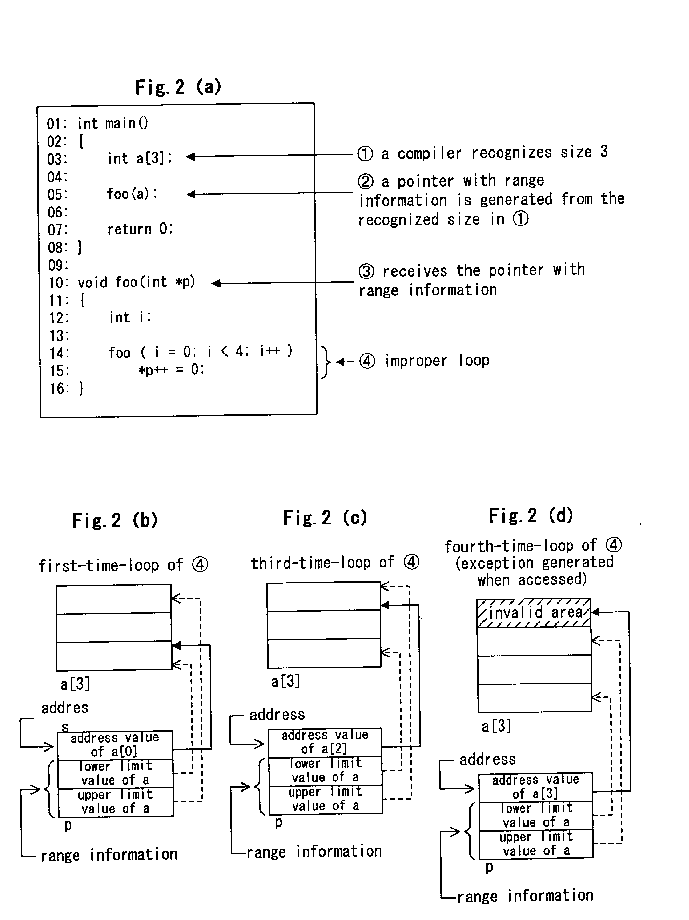

Next, an example of memory protection by the pairing of address register 3 and first range information register 4 shall be described using Fig. 2. Fig. 2(a) is an exemplary diagram of source codes implemented in the first embodiment of this invention. Though in this example, C language is used as the programming language, the same advantages are provided with other programming languages that enable direct handling of pointers (for example, Pascal, etc.,).

With the source codes of Fig. 2(a), a main function and an foo function are defined, and an int type array a[] that is declared in the main function (line 03) is used by the foo function in line 05.

Also with the foo function, a loop using an index i is written in line 14 and line 15.

As described above, with this embodiment's processor architecture (for the sake of simplicity, it shall be deemed hereinafter that (Example 1) is used), since the range information of an upper limit value and a lower limit value are associated inseparably to a single pointer, three address values are used.

Here, with the C language compiler that supports this processor architecture, when line 03 of the main function is evaluated, the head address of array a[] (this shall be regarded as being the same as a pointer) and the size of this array (a[0] to a[2]) correspond to three int type variables.

And in evaluating that the head address of array a[] is handed over as an argument of the foo function in line 05, the compiler generates a pointer with range information (comprising the three address values of the address value of the pointer of a[] and a lower limit value and an upper limit value of this address) based on the size that is made known as mentioned above.

And when the foo function is called in line 10, this compiler substitutes the pointer with range information, concerning the generated array a[], in an int type pointer p (which is also a pointer with range information).

As a result, pointer p will, at the initial point of substitution, will be exactly the same as the pointer with range information of the array a[].

With the foo function, a loop using index i is written in lines 14 to 15. This loop is actually an improper loop that deviates from the appropriate access range.

Here, when index i = 0, pointer p will not differ from its state at the initial point of substitution as shown in Fig. 2(b). That is, the address of pointer p will be matched with the head address of array a[], and the upper limit value and the lower limit value of pointer p will matched with the upper limit value and the lower limit value, respectively, of array a[].

When index i is incremented by the "for" statement of line 14 so that index i = 2 as shown in Fig. 2(c), the address of pointer p will indicate the head address of the last element a[2] of array a[]. Up until this point, the range defined by the upper limit value and the lower limit value of pointer p is not deviated from and there is no problem.

However when index i = 3 and processing is continued as it is, pointer p deviates from the range of array a[] and points to an invalid area as shown in Fig. 2(d). This invalid area may have a garbage value with no meaning set therein or may be secured for another module. In any case, indiscriminate access of an invalid area may invite destruction of a module that is secured there, and normal operation thus cannot be ensured.

However, with the present embodiment, when setting of the address value of pointer p to an address that is incremented by one int type value with respect to the head address of a[2] is attempted, an exception signal S is generated and such a situation is avoided in advance.

Though in line 15, the value "0" is to be substituted in the invalid area, since range violation of pointer p is trapped prior to substitution, the value "0" will not be set in the invalid area.

Thus with this invention, by handling a pointer and its range information in an inseparably associated manner with a single machine language instruction, access violation can be prevented in advance with just the pointer itself (to be more accurate, the pointer with range information).

When similar protection is to be implemented with the prior art, a global table, which will be within the scope of any module, had to be prepared at the source code level, the access ranges of variables must be stored in this table, and this table had to be referenced each time to execute a process. High-speed execution was thus difficult to realize. There was also no way for the access range of a pointer to be reflected in a pointer of another module with which the abovementioned table will be out of scope. Also, whether or not the access range of a pointer is appropriate could not be made known in a module to which the pointer is handed over.

With the present embodiment, it is sufficient to simply substitute or hand over a pointer with range information and there is not need to prepare a global table at the source code level. Also, even if a pointer operation is performed, as long as the operation is performed accurately with the inclusion of the range information, that the range information of the pointer after operation will be appropriate can be ensured.

That is, by the present invention, access range information can be included in a pointer that can be handled substantially equivalently to a normal pointer by the functions of a processor, and improper access by a pointer can be prevented at high speed and accurately even beyond a module.

As is clear from Fig. 2(a), a special description is not required for use of the pointer with range information. Also, the source code description itself is the same as that of the prior art, that is, source code compatibility is provided. A programmer therefore will not need to be especially aware of handling a pointer with range information.

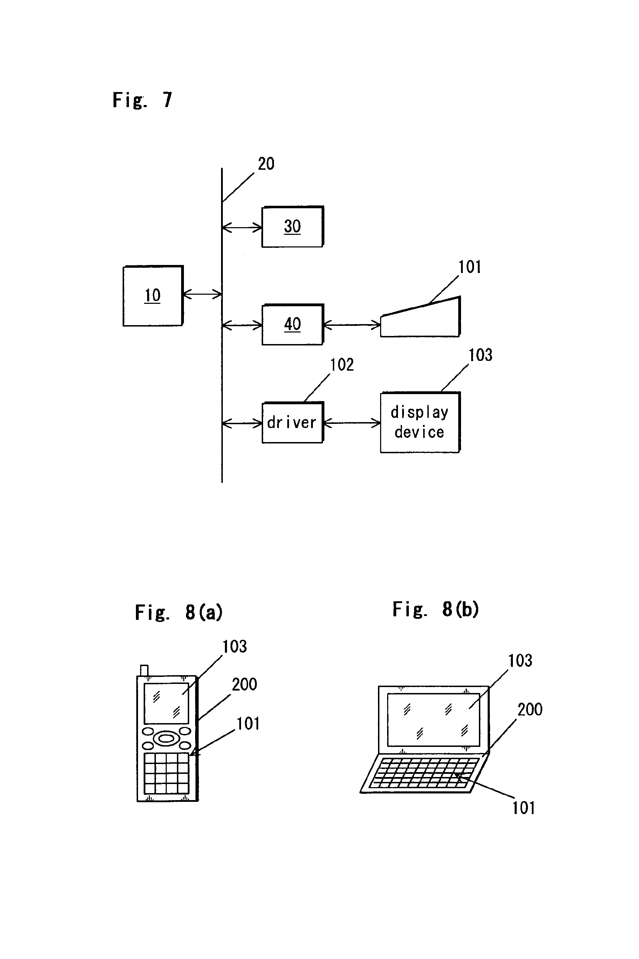

When processor device 10, shown in Fig. 1, is installed in an information processing device, the arrangement will be as shown in Fig. 7.

That is, in addition to the respective elements shown in Fig. 1, a key set 101 is connected to I/O device 40. Key set 101 corresponds to an operating unit that receives inputs from a user. Besides key set 101, a mouse, tablet, digitizer, etc., may be used as the operating unit.

Also, a driver 102 is connected to bus 20, and driver 102 controls a display device 103. Display device 103 corresponds to being a display unit. An LCD, organic EL, CRT, projector, etc., may be used as the display unit. The form of display by display device 103 is not only limited to a color display but can be a gray scale display or just a black-and-white display.

As shown in Fig. 8, this information processing device has a main body case 200, and a representative example of this information processing device is a portable telephone, such as shown in Fig. 8(a) or a PDA or personal computer, etc., such as shown in Fig. 8(b).

### (Second embodiment)

This embodiment relates to a compiling device that supports pointers with range information realized by the pairing of address register 3 and first range information register 4, shown in Fig. 1. Though normally in generating executable codes from source codes, the procedures of compiling, linking, etc., are combined in stages, in the present Specification, the series of procedures from the source codes to the generation of executable codes shall be referred to inclusively as "compiling."

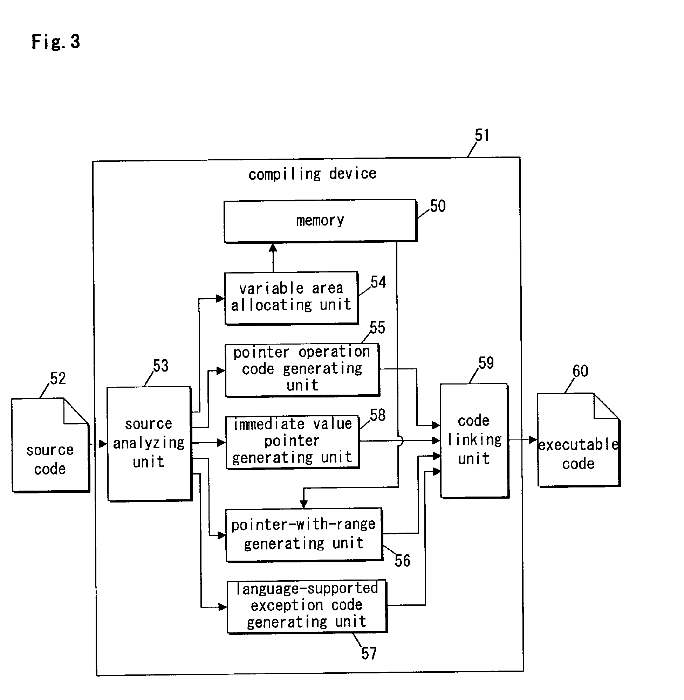

Fig. 3 is a block diagram of the compiling device of the second embodiment of this invention. Needless to say, this compiling device 51 shown in Fig. 2 generates execution codes 60 from source codes 52 written in a programming language that enables direct manipulation of pointers (for example, C or C++ language, Pascal, etc.,).

As mentioned in regard to the first embodiment, since pointers with range information are used in these source codes 52, special descriptions are unnecessary.

In Fig. 2, a source analyzing unit 53 analyzes source codes 52 and determines the transfer destination of each code in accordance with discrimination conditions. Variable ranges are stored in a memory 50.

When a variable declaration code is identified by source analyzing unit 53, a variable area allocating unit 54 receives this code, determines the variable area to be allocated to this code, and stores the variable address and variable range in memory 50.

When a code that generates a pointer from a variable is identified by source analyzing unit 53, a pointer-with-range-information generating unit 56 receives this code, reads the allocated area for the corresponding variable from memory 50, generates a code that generates a pointer variable with range, and outputs this code to a code linking device 59.

When a code that generates a pointer from an immediate value is identified by source analyzing unit 53, an immediate value pointer generating unit 58 generates a code that generates a pointer variable with range that uses the entire address range or uses set values, and outputs this code to code linking device 59.

When a code is identified as a pointer operation code by source analyzing unit 53, a pointer operation code generating unit 55 generates a code for performing pointer operation that inherits the address range and outputs this code to code linking device 59.

When a code is not applicable to any of the discrimination conditions of source analyzing unit 53, a language-supported execution code generating unit 57 receives the code, generates a code that is in accordance with the syntax of the programming language, and outputs this code to code linking device 59.

Code linking unit 59 links all of the generated codes and outputs executable codes 60.

Here, the access range of a pointer may be defined by an upper limit value and a lower limit value as in the first embodiment, or by a lower limit value and the length from this lower limit value to an upper limit value, or by just an upper limit value.

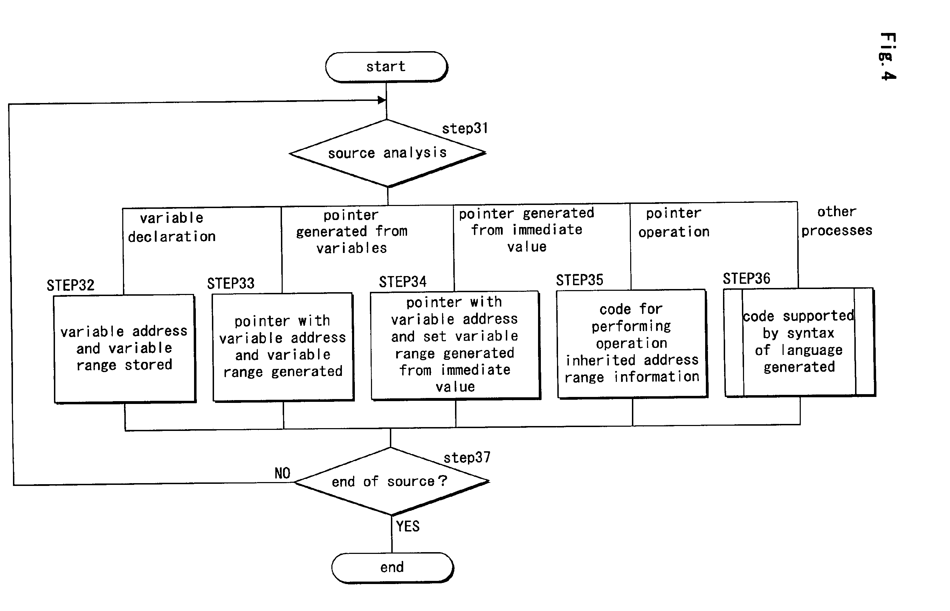

The operations shall now be described. Fig. 4 is a flowchart of the compiling device of the second embodiment of this invention.

First in step 31, source analyzing unit 53 analyzes source codes 52 and performs branching and determines the transfer destination of each code in accordance with discrimination conditions.

If in step 31 a variable declaration is identified, variable area allocating unit 54 secures a variable area and the address and range of this area is stored in memory 50 in step 32.

If in step 31, the generation of a pointer from a variable is identified, pointer-with-range generating unit 56 generates, in step 33, a code handling a pointer that includes a variable address and a variable range and generates a pointer that can be processed by instruction processing unit 1.

If in step 31, the generation of a pointer from an immediate value is identified, immediate value pointer generating unit 58 generates, in step 34, a pointer with range information in accordance with the pointer that is generated from the immediate value and priorly determined values. The range information in this case is determined to be the entire memory space of the processor or is determined in accordance with settings of the compiler.

If in step 31, a pointer operation is identified, pointer operation code generating unit 55 generates, in step 35, a code that performs an operation that inherits the address range information.

If a case besides the above is identified in step 31, language-supported execution code generating unit 57 generates, in step 36, a code that is in accordance with the syntax of the language (an execution code that is in accordance with the syntax of C language as in the prior art).

Then if in step 37, source analyzing unit 53 has repeated the processes of steps 31 to 36 to the end of the source and has reached the end of the source, the compiling process is ended.

Since the codes generated here make use of the pairing of address register 3 and first range information register 4, exception signal S1 can be generated when the range of pointer access falls outside the range of a variable that is the origin of generation of a pointer and a pointer that accompanies range information can be processed by a single instruction when it is loaded into a register. The code size can thus be made small and high-speed operation is enabled.

With this compiling device 51, pointers with range information can be supported and memory protection can be performed using conventional C language source codes as they are.

### (Third embodiment)

This embodiment relates to a compiling device that supports execution address value range protection by means of the pairing of program counter 5 and second range information register 6, shown in Fig. 1.

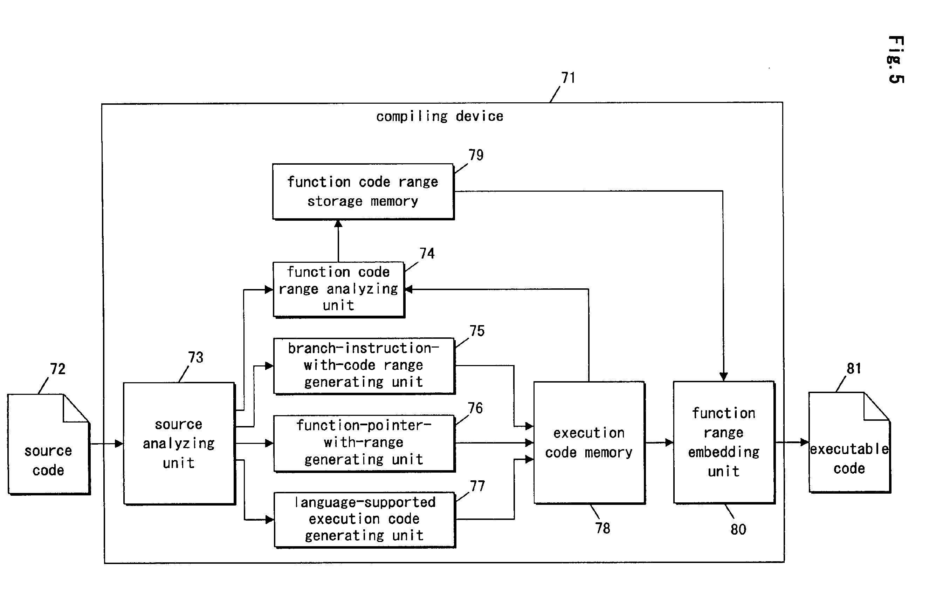

Fig. 5 is a block diagram of the compiling device of the third embodiment of this invention. As shown in Fig. 5, this compiling device 71 generates execution codes 81 from source codes 72 written in the same language as the second embodiment and is equipped with the components described below.

A source analyzing unit 73 determines the transfer destination of each code in accordance with discrimination conditions. Function code ranges are stored in a function code range storage memory 79. The generated execution codes are stored in an execution code memory 78.

When source analyzing unit 73 identifies a function declaration completion code, a function code range analyzing unit 74 analyzes the range of the function code in execution code memory 78 and stores the range of the completed function code in function code range storage memory 79.

When source analyzing unit 73 identifies a function calling code, a branch-instruction-with-code-range generating unit 75 receives this code, generates a branch instruction with code range information with the value unresolved, and outputs this code to execution code memory 78.

When source analyzing unit 73 identifies a code that generates a function pointer, a function-pointer-with-range generating unit 76 receives the code and generates a function pointer variable with code range with the value being unresolved as it is.

When a code is not applicable to any of the discrimination conditions of source analyzing unit 73, a language-supported execution code generating unit 77 receives the code, performs code generation in accordance with the syntax of the programming language, and outputs the execution code to execution code memory 78.

After completion of the processing of the entire program source, a function range embedding unit 80 reads the execution codes from execution code memory device 78, reads the unresolved function addresses and function address ranges from function code range storage memory 79 and embeds these into the codes, and outputs executable codes 81.

With this compiler device, conventional C language source codes can be used as they are to realize range protection of execution address values.

Here, as with the first embodiment, the range of execution address value access may be defined by an upper limit value and a lower limit value, or by a lower limit value and the length from this lower limit value to an upper limit value, or by just an upper limit value.

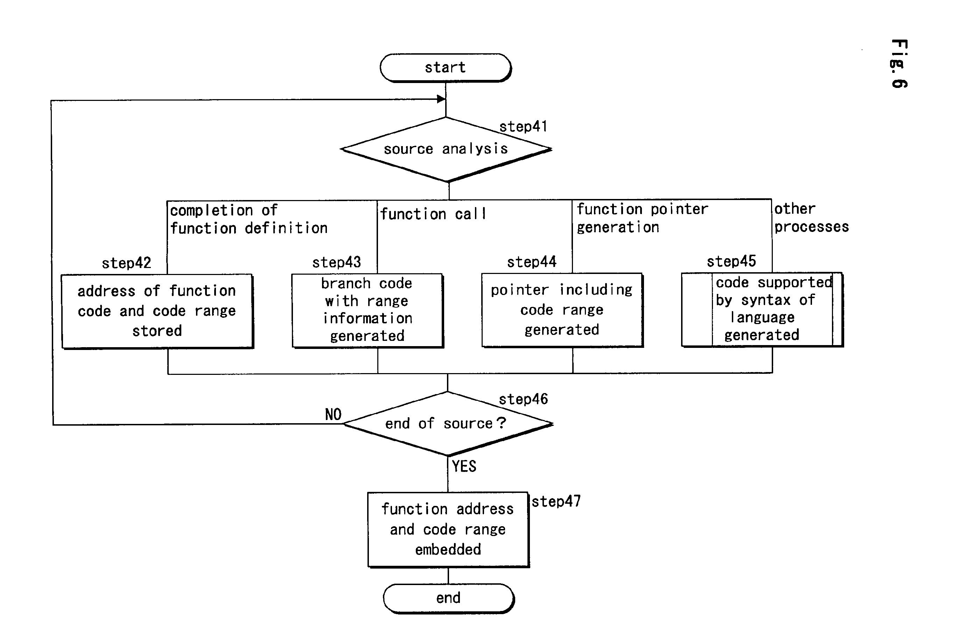

The operations shall now be described. Fig. 6 is a flowchart of the compiling device of the third embodiment of this invention.

First in step 41, source analyzing unit 73 analyzes source codes 72 in order and discriminates the processing details indicated by the statements.

If in step 41, the completion of a function definition, function code range analyzing unit 74 stores, in step 42, the start address of the execution code that is generated by the function and the address range of the code in function code range storage memory 79.

If in step 41, a function call is identified, branch-instruction-with-code-range generating unit 75 generates a branch code with range information in step 43.

If in step 41, the generation of a function pointer is identified, function-pointer-with-range generating unit 76 generates a pointer including a code range in step 44.

If a case besides the above is identified in step 41, language-supported execution code generating unit 77 performs, in step 45, conversion to an execution code that is in accordance with the language as in the prior art.

Then if in step 46, source analyzing unit 73 has repeated the processes of steps 41 to 45 to the end of the source and has reached the end of the source, function range embedding unit 80 reads the execution codes from execution code memory device 78, reads the unresolved function addresses and function address ranges from function code range storage memory 79 and embeds these into the codes, and outputs executable codes 81.

With this compiler device 71, conventional C language source codes can be used as they are to support execution address values with protected range information and prevent crashing.

Though the compiler devices of the second and third embodiments were described separately above, these may be arranged in combination. In fact for actual installation, combining these embodiments is more preferable. In such a case, arrangements are made so that the effects of the respective embodiments will not interfere with each other.

This invention provides the following effects.

This invention enables complete protection of the access range of a pointer beyond a module, which could not be realized with the prior art.

This invention enables the preparation of a processor with a memory protection function while maintaining upper level compatibility of execution codes of an existing processor architecture.

The preparation of a compiler, which makes use of the memory protection function with this processor while maintaining compatibility at the level of operable source codes, is also enabled.

This invention is applicable regardless of whether or not an OS or other platform that operates in a privileged mode of a processor exists and, unlike an MMU that functions in process units, functions effectively even in a case where a single, gigantic process is to be arranged.

Registers are the only contents that are switched for task switching, thus ensuring a worst-case task switching time that is shorter than that when an MMU or other mechanism, with which there is a possibility of interchange of a table, is used. Applications to real-time control programs are thus enabled.

Combined use with an MMU and other existing memory protection techniques is also possible.

By combining with a debugger device that traps and displays the exception that is generated, monitoring of improper memory access is enabled for real-time debugging of a real-time control program, thereby enabling reduction of program developing time.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A processor device comprising:
an instruction processing unit (1) operable to read a program on a memory device (30) to execute the program on the memory device (30);
an address register (3) operable to be read and written by said instruction processing unit (1), and to store the absolute address of a pointer in the program;
a range information register (4) operable to be read and written by said instruction processing unit (1), and to store range information concerning the pointer by using the absolute address; and
an exception generating unit (7) operable to input the output of said instruction processing unit (1) and the range information in said range information register (4), and to output an exception signal to said instruction processing unit (1) when said instruction processing unit (1) accesses the memory device (30) using the pointer concerning said address register if there is a range violation of the memory device (30).

2. A processor device comprising:
an instruction processing unit (1) operable to read a program on a memory device (30) to execute the program on the memory device (30);
a program counter (5) operable to be read and written by said instruction processing unit (1), and to store an execution address value of the program;
a range information register (4) operable to be read and written by said instruction processing unit (1), and to store range information concerning the execution address value of the program; and
an exception generating unit (7) operable to input this new execution address value and
the range information in said range information register (4) when said instruction processing unit (1) stores a new execution address value, and to output an exception signal to said instruction processing unit (1) if there is a range violation.

3. A processor device comprising:
an instruction processing unit (1) operable to read a program on a memory device (30) to execute the program on the memory device (30);
an address register (3) operable to be read and written by said instruction processing unit (1), and to store the absolute address of a pointer in the program;
a first range information register (4) operable to be read and written by said instruction processing unit (1), and to store range information concerning the pointer by using the absolute address;
a first exception generating unit (7) operable to input the output of said instruction processing unit (1) and the range information in said first range information register (4) when said instruction processing unit (1) accesses the memory device (30), and to output a first exception signal to said instruction processing unit (1) if there is a range violation of the memory device (30);
a program counter (5) operable to be read and written by said instruction processing unit (1), and to store an execution address value of the program;
a second range information register (6) operable to be read and written by said instruction processing unit (1), and to store range information concerning the execution address value of the program; and
a second exception generating unit (8) operable to input this new execution address value and the range information in said second range information register (6) when said instruction processing unit (1) stores a new execution address value in said program counter (5), and to output a second exception signal to said instruction processing unit (1) if there is a range violation.

4. The processor device as set forth in Claim 3, wherein said address register (3), said first range information register (4), said program counter (5), and said second range information register (6) are all composed of general-purpose registers.

5. The processor device as set forth in Claim 1, wherein the range information includes an upper limit value of the range and a lower limit value of the range.

6. The processor device as set forth in Claim 1, wherein the range information includes a lower limit value of the range and the length from the lower limit value to an upper limit value of the range.

7. The processor device as set forth in Claim 1, wherein the range information includes an attribute indicating the enabling/disabling of reading and writing.

8. The processor device as set forth in Claim 1, wherein the range information includes an upper limit value of the range but does not include a lower limit value of the range.

9. The processor device as set forth in Claim 1, wherein said instruction processing unit (1) executes, in a single machine language instruction, a process of storing the absolute address of a pointer of a program in said address register (3) and a process of storing the range information of this pointer in said range information register (4).

10. The processor device as set forth in Claim 2, wherein said instruction processing unit (1) executes, in a single machine language instruction, a process of storing a new execution address value in said program counter (5) and a process of storing the range information of the execution address value in said range information register (4).

11. A compiling device, generating execution codes from source codes written in a programming language that enables direct manipulation of pointers, said compiling device comprising:
a memory (50) operable to store variable ranges;
a source analyzing unit (53) operable to analyze the source codes to determine the transfer destinations of codes in accordance with a branch condition;
a variable code allocating unit (54), when said source analyzing unit (53) identifies a variable declaration code, operable to receive the variable declaration code to be allocated to the variable declaration code, and to store the variable address and the variable range in said memory (50);
a pointer-with-range generating unit (56), when said source analyzing unit (53) identifies a code that generates a pointer from a variable, operable to receive this code, and to read the allocated area for the variable from said memory (50) to generate a code that generates a pointer variable with range;
an immediate value pointer generating unit (58), which, when said source analyzing unit (53) identifies a code that generates a pointer from an immediate value, operable to generate a code that generates a pointer variable having a limiter whose limit range is defined using a set value or the entire address;
a pointer operation code generating unit (55), when said source analyzing unit (53) identifies a pointer operation, operable to generate a code that performs a pointer operation that inherits the address range; and
a language-supported execution code generating unit (57), when said source analyzing unit (53) judges a code as not being applicable to any of a branch condition, operable to receive the code and to perform code generation in accordance with the syntax of the programming language.

12. A compiling device, generating execution codes from source codes written in a programming language that enables direct manipulation of pointers, said compiling device comprising:
a function code range storage memory (79) operable to store function code ranges;
an execution code memory (78) operable to store execution codes;
a source analyzing unit (73) operable to analyze the source code to determine the transfer destinations of the source codes in accordance with a branch condition;
a function code range analyzing unit (74), when said source analyzing unit (73) identifies a function declaration completion code, operable to analyze the range of the function code in said execution code memory (78) to store the function code range in said function code range storage memory (79);
a branch-instruction-with-code-range generating unit (75), when said source analyzing unit (73) identifies a function calling code, operable to receive this code to generate a branch instruction with code range;
a function-pointer-with-range generating unit (76), when said source analyzing unit (73) identifies a code that generates a function pointer, operable to receive the code to generate a function pointer variable with code range;
a language-supported execution code generating unit (77), when said source analyzing unit (73) judges a code as not being applicable to any of a branch condition, operable to receive the code to perform code generation in accordance with the syntax of the language; and
a function range embedding unit (80) operable to take out the codes from said execution code memory (78), and to embed the values read from said function code range storage memory (79) into the function pointer.

13. The compiling device as set forth in Claim 11, wherein the range is defined by an upper limit value and a lower limit value.

14. The compiling device as set forth in Claim 11, wherein the range is defined by a lower limit value and the length from the lower limit value to an upper limit value.

15. The compiling device as set forth in Claim 11, wherein the range is defined by just an upper limit value.

16. A compiling method for generating codes from source codes written in a programming language that enables direct manipulation of pointers, said compiling method comprising:
analyzing a program source to branch to a next process into the variable area according to a branch condition;
allocating a variable area, and storing variable address and a variable range into the variable area when a unit of the program source is identified as a variable declaration in said analyzing a program source;
creating a code, which generates a pointer variable having a range limiter whose limit range is defined using a set value or the entire address when the generation of a pointer from a variable is identified in said analyzing a program source;
creating a pointer variable with range that uses the entire address area or uses set values when the generation of a pointer from an immediate value is identified in said analyzing a program source;
generating a code performing pointer operation that inherits the address range if a pointer operation is identified in said analyzing a program source; and
creating a code in accordance with the syntax of the programming language when none of said a branch condition apply in said analyzing a program source.

17. A compiling method for generating codes from source codes written in a programming language that enables direct manipulation of pointers, said compiling method comprising:
analyzing a program source to branch to a next process into the variable area according to a branch condition;
storing a function code area when completion of a function definition is identified in said analyzing a program source;
generating a branch instruction with code range when a function call is identified in said analyzing a program source ;
generating a function pointer with code range when a function pointer generation is identified in said analyzing a program source;
embedding codes, which are generated by said branch instruction with code range and said function pointer with code range, after code conversion has been performed for all of the source code.

18. A compiling method for generating codes from source codes written in a programming language that enables direct manipulation of pointers, said compiling method comprising:
analyzing a program source to branch to a next process into the variable area according to a branch condition;
allocating a variable area, and storing variable address and a variable range into the variable area when a unit of the program source is identified as a variable declaration in said analyzing a program source;
creating a code, which generates a pointer variable having a upper range limiter when the generation of a pointer from a variable is identified in said analyzing a program source;
creating a pointer variable with upper limit range that uses the entire address area or uses set values when the generation of a pointer from an immediate value is identified in said analyzing a program source;
generating a code performing pointer operation that inherits the address range when a pointer operation is identified in said analyzing a program source; and
creating a code in accordance with the syntax of the programming language when none of said a branch condition apply in said analyzing a program source.

19. The compiling method as set forth in Claim 16, wherein the range is defined by an upper limit value and a lower limit value.

20. The compiling method as set forth in Claim 16, wherein the range is defined by a lower limit value and the length from the lower limit value to an upper limit value.

21. The compiling method as set forth in Claim 16, wherein the range is defined by just an upper limit value.

22. An information processing device comprising the processor device as set forth in Claim 1; an operating unit, notifying user inputs to said processor device; and a display unit, controlled by said processor device and displaying images.
